# EUROPEAN PATENT APPLICATION

(11) **EP 2 228 353 A1**
(43) Date of publication of application: **15.09.2010**
(21) Application number: 08864787.0
(22) Date of filing: 24.12.2008
(51) Int. Cl.: C04B 35/46, H01C 7/02

(54) **SEMICONDUCTOR CERAMIC COMPOSITION**

(30) Priority: 26.12.2007 JP 2007333528
(71) Applicant: Hitachi Metals, Ltd., Minato-ku Tokyo 105-8614 (JP)
(72) Inventor: The designation of the inventor has not yet been filed
(74) Representative: Zimmermann & Partner
(86) International application number: PCT/JP2008/073417
(87) International publication number: WO 2009/081933

(57) **Abstract**

There is provided a semiconductor ceramic composition in which a part of Ba of BaTiO₃ is substituted with Bi-Na, the semiconductor ceramic composition being capable of arbitrary controlling jump characteristic while maintaining room temperature resistivity low.

A semiconductor ceramic composition in which a part of Ba of BaTiO₃ is substituted with Bi-Na, the composition having a P-type semiconductor at a grain boundary, is provided, and existence ratio of the P-type semiconductor is changed by calcination conditions, addition amount of additives, sintering conditions, and the like to thereby arbitrary control room temperature resistivity while maintaining jump characteristic high.

## Description

### TECHNICAL FIELD

The present invention relates to a semiconductor ceramic composition having a positive resistive temperature, which is used in a PTC thermistor, a PTC heater, a PTC switch, a temperature detector and the like.

### BACKGROUND ART

Compositions comprising BaTiO₃ having added thereto various semiconductor dopants have conventionally been proposed as materials showing a PTCR characteristic (Positive Temperature Coefficient of Resistivity). Those compositions have a Curie temperature around 120°C. It is required for those compositions to shift the Curie temperature, depending on the use.

For example, it has been proposed to shift the Curie temperature by adding SrTiO₃ to BaTiO₃. In this case, however, the Curie temperature shifts to only a negative direction, and does not shift to a positive direction. Currently, only PbTiO₃ has been known as an additive material for shifting the Curie temperature to a positive direction. However, since PbTiO₃ contains an element that causes environmental pollution, a material free of use of PbTiO₃ has been demanded in recent years.

There has been proposed a method for producing a BaTiO₃ semiconductive ceramics for the purpose of preventing decrease in temperature coefficient of resistance due to Pb substitution as well as decreasing voltage dependence to thereby improve productivity and reliability (see Patent Document 1). In the production method described in Patent Document 1, at least one of Nb, Ta and rare earth elements is added to a composition having a PbTiO₃-free structure of Ba₁₋₂ₓ(BiNa)ₓTiO₃ obtained by substituting a part of Ba of BaTiO₃ with Bi-Na, wherein x is a range of 0<x≤0.15, followed by sintering in nitrogen and then heat-treating in an oxidizing atmosphere.

Patent Document 1 discloses in Examples a composition having 0.1 mol% of Nd₂O₃ as a semiconductor dopant added thereto. However, when a trivalent cation is added as a semiconductor dopant in the case of performing valence control of the composition, the effect of semiconductor dopant is decreased due to the presence of a monovalent Na ion. As a result, a problem that resistivity at room temperature is increased occurs.

A great characteristic of a PTC material is that resistivity of a PTC material is rapidly increased at a Curie point (jump characteristic = temperature coefficient of resistance α). This is considered due to that resistance (resistance by Schottky barrier) formed at a grain boundary is increased. PTC materials are required to have high jump characteristic of the resistivity as their properties.

Pb-free PTC materials as in Patent Document 1 have a tendency that the materials having excellent jump characteristic have high room temperature resistivity, and the materials having poor jump characteristic have too low room temperature resistivity. Thus, the Pb-free PTC materials had a problem that the materials cannot satisfy both stable room temperature resistivity and excellent jump characteristic. In addition, the materials having poor jump characteristic had problems that when electric current is applied to the material, temperature fluctuation is increased around a Curie point, and additionally, stable temperature (temperature at which increase of temperature stops when electric current is applied) tends to be higher than the Curie point.

To suppress fluctuation of stable temperature and to facilitate material planning, the jump characteristic must be improved. However, the improvement necessarily involves increase in room temperature resistivity, resulting in great difficulty to satisfy both the requirement of maintaining high jump characteristic and the requirement of suppressing increase in room temperature resistivity. As a result, in ordinary cases, the room temperature resistivity is excessively increased, and exceeds the usable range.

Patent Document 1 discloses in Examples, mixing all the constituents of a composition, such as BaCO₃, TiO₂, Bi₂O₃, Na₂O₃, PbO and the like as starting materials before calcination, followed by calcination, shaping, sintering and heat-treatment. However, in the composition wherein a part of Ba of BaTiO₃ has been substituted with Bi-Na, when all the constituents of the composition are mixed before calcination, there arises a problem that Bi volatilizes during the calcination step, thereby causing compositional deviation, and as a result, formation of a different phase (glass phase) is accelerated, and this induces increase in resistivity at room temperature (room temperature resistivity) and variation of a Curie temperature.

It is considered to perform calcination at low temperature in order to suppress volatilization of Bi. However, the calcination has a problem that although volatilization of Bi is suppressed, a complete solid solution cannot be formed, and the desired characteristics cannot be obtained.

To overcome the above problems of the conventional BaTiO₃ semiconductive ceramics, the present inventors previously proposed a semiconductor ceramic composition represented by [(Al_{0.5}A2_{0.5})ₓ(Ba_{1-y}Q_{y})₁₋ₓ]TiO₃ (Al is at least one of Na, Ka and Li, A2 is Bi, and Q is at least one of La, Dy, Eu and Gd) wherein x and y satisfy 0<x≤0.2 and 0.002<y≤0.01, and a semiconductor ceramic composition represented by [(Al_{0.5}A2_{0.5})ₓBa₁₋ₓ][Ti_{1-z}M_{z}]O₃ (Al is at least one of Na, Ka and Li, A2 is Bi, and M is at least one of Nb, Ta and Sb) wherein x and z satisfy 0<x≤0.2 and 0<z≤0.01, as a material in which a part of BaTiO₃ is substituted with Bi-Na, that can shift a Curie temperature to a positive direction and greatly decreases room temperature resistivity, without using Pb (Patent Document 2).

The present inventors further proposed the followings. In producing a semiconductor ceramic composition in the above-mentioned Patent Document 2, a (BaQ)TiO₃ composition and a (BiNa)TiO₃ composition are separately prepared. Those compositions are calcined at the optimum temperatures according to the respective powders such that the (BaQ)TiO₃ composition is calcined at relatively high temperature and the (BiNa)TiO₃ composition is calcined at relatively low temperature. As a result, volatilization of Bi in the (BiNa)TiO₃ composition is suppressed, thereby preventing compositional deviation of Bi-Na and formation of a different phase can be thus suppressed. When those calcined powders are mixed, shaped and sintered, a semiconductor ceramic composition having low room temperature resistivity and suppressed variation of a Curie temperature is obtained (Patent Document 3).
Patent Document 1: JP-A-56-169301
Patent Document 2: JP-A-2005-255493
Patent Document 3: WO 2006/118274 A1

### DICLOSURE OF THE INVENTION

### Problems that the Invention is to Solve

The above-described semiconductor ceramic compositions proposed by the present inventors have low room temperature resistivity and excellent jump characteristic, as compared with the conventional materials. However, to use those compositions in various uses such as a PTC thermistor, a PTC heater and a PTC switch, it is necessary to control the jump characteristic or the room temperature resistivity depending on the respective uses.

To control the jump characteristic or the room temperature resistivity, it is considered to add additives or to vary sintering conditions. However, when such a variation of a production method is carried out in the semiconductor ceramic compositions, there arises a problem that the jump characteristic or the room temperature resistivity cannot be controlled alone.

The present invention aims to provide a semiconductor ceramic composition in which a part of Ba of BaTiO₃ is substituted with Bi-Na, the semiconductor ceramic composition being capable of arbitrarily controlling room temperature resistivity while maintaining high jump characteristic.

### Means for Solving the Problems

As a result of intensive studies to achieve the above object, the present inventors noted the method previously proposed by the present inventors disclosed in Patent Document 3, that is, a method in which a (BaQ)TiO₃ composition (hereinafter referred to as "calcined BT powder") and a (BiNa)TiO₃ composition (hereinafter referred to as a "calcined BNT powder") are separately prepared, and the calcined BT powder and the calcined BNT powder each are calcined at the optimum temperature according to the respective powders (hereinafter referred to as a "separate calcination method").

The present inventors have found that in the separate calcination method, the calcined BT powder is prepared such that a part of BaCO₃ and TiO₂ remains therein, and the calcined BT powder and the calcined BNT powder are mixed and sintered, or a predetermined amount of at least one of BaCO₃ and TiO₂ is added to at least one of the calcined BT powder and the calcined BNT powder, followed by sintering; alternatively, in mixing and sintering the calcined BT powder and the calcined BNT powder, those powders are sintered without completely solid-solubilizing BT and BNT, thereby P-type semiconductor is formed in a semiconductor ceramic composition. The present inventors have further found that room temperature resistivity can arbitrarily be controlled while maintaining the jump characteristic high by controlling the amount of the P-type semiconductor formed, thereby completing the present invention.

The present invention provides a semiconductor ceramic composition in which a part of Ba of BaTiO₃ is substituted with Bi-Na, the composition having a P-type semiconductor at a grain boundary.

According to the present invention, in the above-mentioned semiconductor ceramic composition, it is preferable that an area concentration of the P-type semiconductor is 0.01 % or more in accordance with an observation with a scanning capacitance microscope.

According to the present invention, in the above-mentioned semiconductor ceramic composition, it is preferable that the composition formula is represented by [(BiNa)ₓ(Ba_{1-y}Ry)₁₋ₓ]TiO₃ (wherein R is at least one rare earth element), in which x and y satisfy 0<x≤0.3 and 0<y≤0.02.

According to the present invention, in the above-mentioned semiconductor ceramic composition, it is preferable that the composition formula is represented by [(BiNa)ₓBa₁₋ₓ] [Ti_{1-z}M_{z}]O₃ (wherein M is at least one of Nb and Sb), in which x and z satisfy 0<x≤0.3 and 0<z≤0.005.

### Advantage of the Invention

According to the present invention, there can be provided a semiconductor ceramic composition capable of arbitrarily controlling room temperature resistivity while maintaining jump characteristic high.

### BRIEF DESCRIPTION OF THE DRAWINGS

Fig. 1 is a view showing a structure photograph of an observation image of the semiconductor ceramic composition of the present invention using a scanning capacitance microscope.
Fig. 2 is a view showing a structure photograph of an observation image of the semiconductor ceramic composition of the present invention using a scanning capacitance microscope.
Fig. 3 is a view showing a structure photograph of an observation image of the semiconductor ceramic composition of the present invention using a scanning capacitance microscope.
Fig. 4 is a view showing a structure photograph of an observation image of the semiconductor ceramic composition of the present invention using a scanning capacitance microscope.
Fig. 5 is a view showing a structure photograph of an observation image of the semiconductor ceramic composition of the present invention using a scanning capacitance microscope.

### BEST MODE FOR CARRYING OUT THE INVENTION

The semiconductor ceramic composition of the present invention can be any composition so long as it contains a composition in which a part of Ba of BaTiO₃ is substituted with Ba-Ni. A composition having a composition formula represented by [(BiNa)ₓ(Ba_{1-y}Ry)₁₋ₓ]TiO₃ (wherein R is at least one rare earth element), in which x and y satisfy 0<x≤0.3 and 0<y≤0.02; or a composition having a composition formula represented by [(BiNa)ₓBa₁₋ₓ][Ti_{1-z}M_{z}]O₃ (wherein M is at least one ofNb and Sb), in which x and z satisfy 0<x≤0.3 and 0<z≤0.005, is preferred.

In the [(BiNa)ₓ(Ba_{1-y}R_{y})₁₋ₓ]TiO₃ composition, x indicates a component range of (BiNa), and is preferably in a range of 0<x≤0.3. When x is 0, the Curie temperature cannot shift to a high temperature side, while when it exceeds 0.3, the resistivity at room temperature approaches 10⁴ Ωcm and the composition is difficult to apply to a PTC heater and the like, both of which are not preferred.

R is at least one of rare earth elements, and La is most preferred. In the composition formula, y indicates a component range of R, and is preferably in a range of 0<y≤0.02. When y is 0, the composition cannot be conductive, while when it exceeds 0.02, the resistivity at room temperature is increased, both of which are not preferred. The valence control is performed by changing the y value. In the case that valence control of the composition is performed in the system in which a part of Ba is substituted with Bi-Na, when a trivalent cation is added as a semiconductor dopant, the effect of semiconductor dopant is decreased due to the presence of a monovalent Na ion and volatilization of Bi, and as a result, there occurs a problem that resistivity at room temperature is increased. For this reason, the more preferred range is 0.002≤y≤0.02. The range 0.002≤y≤0.02 means from 0.2 mol% to 2.0 mol% in terms of mol% expression. In Patent Document 1 described above, 0.1 mol% of Nd₂O₃ is added as a semiconductor dopant. However, it is considered that the addition cannot realize sufficient semiconductor formation as PTC use.

In the [(BiNa)ₓBa₁₋ₓ][Ti_{1-z}M_{z}]O₃ composition, x indicates a component range of (BiNa), and is preferably in a range of 0<x≤0.3. When x is 0, the Curie temperature cannot shift to a high temperature side, while when it exceeds 0.3, the resistivity at room temperature approaches 10⁴ Ωcm and the composition is difficult to apply to a PTC heater and the like, both of which are not preferred.

M is at least one of Nb and Sb, and is preferably Nb. In the composition formula, z indicates a component range of M, and is preferably in a range of 0<z≤0.005. When z is 0, valence control cannot be performed and the composition cannot be conductive, while when it exceeds 0.005, the resistivity at room temperature exceeds 10³ Ωcm, both of which are not preferred. The range 0<z≤0.005 means from 0 to 0.5 mol% (excluding 0) in terms of mol% expression.

In the case of the [(BiNa)ₓBa₁₋ₓ][Ti_{1-z}m_{z}]O₃ composition, Ti is substituted with an element M to perform valence control. In this case, since the addition of the element M (addition amount: 0<z≤0.005) has a purpose of valence control of Ti site which is a tetravalent element, the valence control can be performed in an amount smaller than a preferred addition amount of an element R (0.002≤y≤0.02) in the [(BiNa)ₓ(Ba_{1-y}Ry)₁₋ₓ]TiO₃ composition in which R is used as a semiconductor dopant. This has an advantage that internal strain of the semiconductor ceramic composition of the invention can be reduced.

In the above-described both compositions of [(BiNa)ₓ(Ba_{1-y}R_{y})₁₋ₓ]TiO₃ and [(BiNa)ₓBa₁₋ₓ][Ti_{1-z}M_{z}]O₃, a ratio between Bi and Na is basically 1:1. The composition formulae can be represented by [(Bi_{0.5}Na_{0.5})ₓ(Ba_{1-y}Ry)₁₋ₓ]TiO₃ and [(Bi_{0.5}Na_{0.5})ₓBa₁₋ₓ][Ti_{1-z}M_{z}]O₃. The reason that the ratio between Bi and Na is basically 1:1 is, for example, that Bi may volatilize in a calcination step and fluctuation may occur in the ratio between Bi and Na. That is, the case that the ratio is 1:1 at the time of blending but deviates from 1:1 in a sintered body is included in the present invention.

A characteristic of the present invention is that P-type semiconductor is present at a grain boundary of a semiconductor ceramic composition in which a part of Na of BaTiO₃ is substituted with Bi-Na.

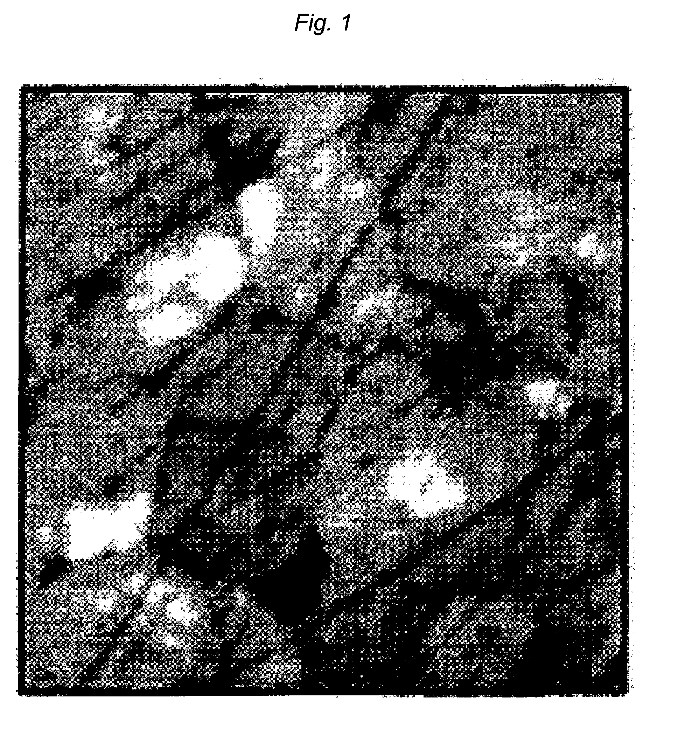

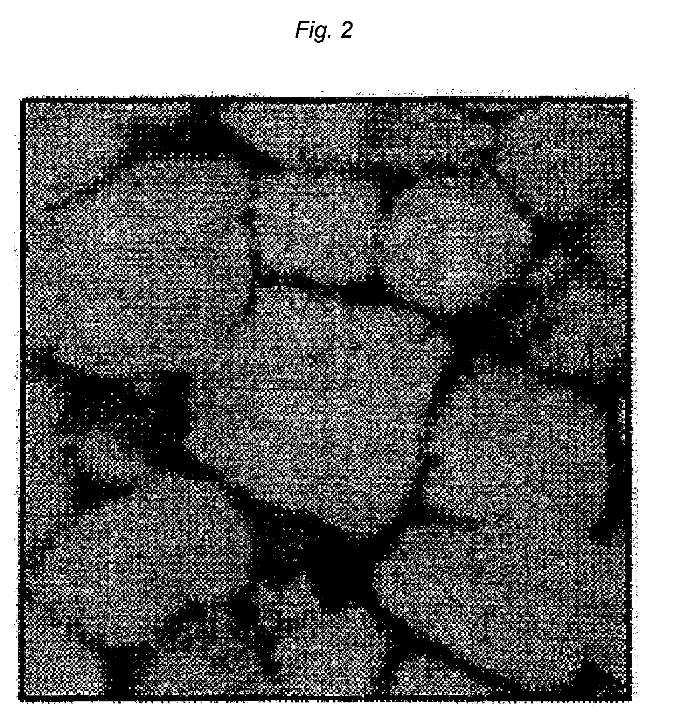

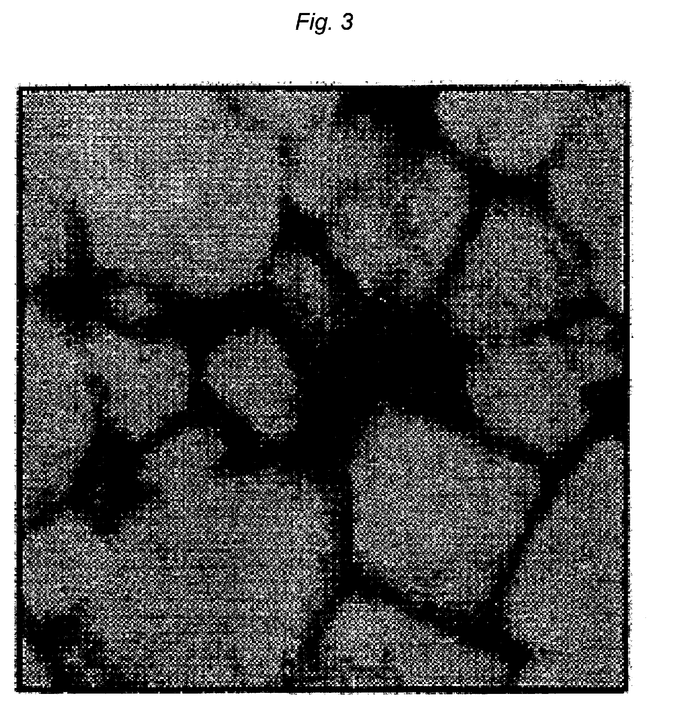

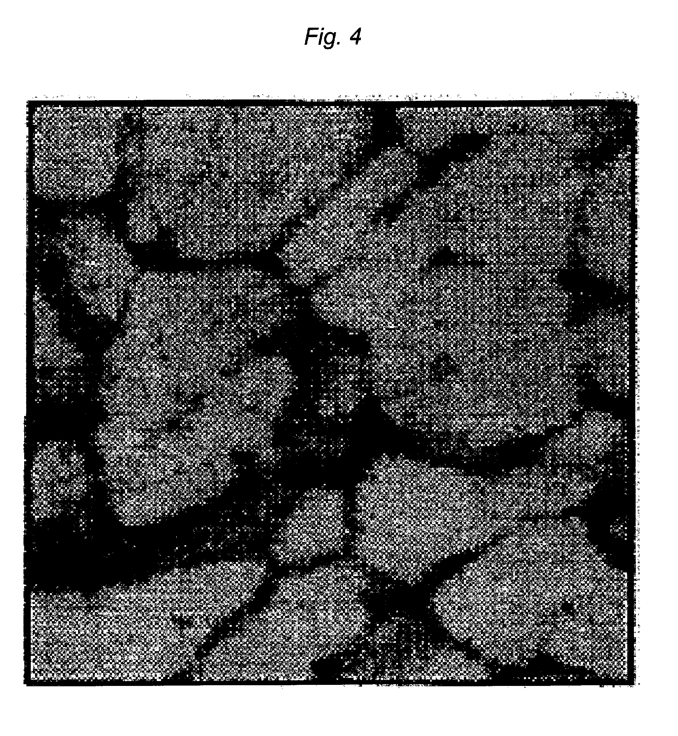

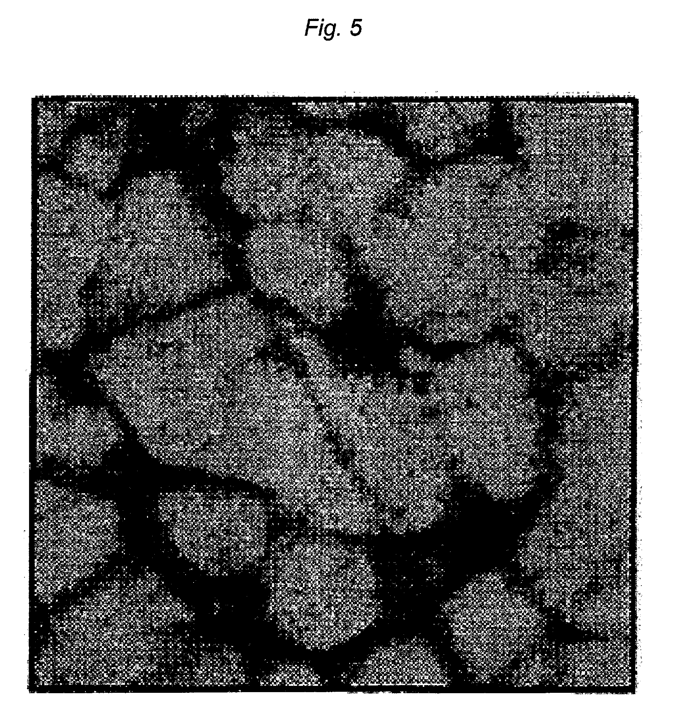

The presence of P-type semiconductor can be confirmed by, for example, observing an arbitrary face of the semiconductor ceramic composition with a scanning capacitance microscope. Figs. 1 to 5 are views showing a structure photograph obtained by observing an arbitrary face of the semiconductor ceramic composition of the present invention with a scanning capacitance microscope. In each drawing, parts shown in white are main crystal of the present composition, parts shown in gray are grain boundary, and parts shown in black than gray are P-type semiconductor. As is apparent from Figs. 1 to 5, P-type semiconductor is present at the grain boundary.

The existence rate of the P-type semiconductor is obtained, for example, as follows. An arbitrary face of the semiconductor ceramic composition is observed with a scanning capacitance microscope, and the observation image (or structure photograph) is subjected to image processing. The number of dots on the parts corresponding to the P-type semiconductor in the data after the image processing, that is, the number of dots on the parts shown in black than gray in Figs. 1 to 5, is counted. The number of dots is multiplied by an area per dot. The area obtained is divided by the total area of parts having been subjected to image processing. Thus, an area concentration (%) of the P-type semiconductor in the semiconductor ceramic composition can be obtained. The area concentration is constant on any face of the inside of a sample, and the P-type semiconductor part is isotropic. Therefore, the area concentration reflects a volume concentration in the material.

In the present invention, the area concentration of the P-type semiconductor is preferably 0.01 % or more. Where the area concentration is less than 0.01 %, room temperature resistance cannot be controlled, which is not preferred. When the area concentration is changed in the range of 0.01% or more, the jump characteristic can be controlled. The upper limit of the area concentration is not limited, but the room temperature resistivity tends to be increased as the area concentration is increased. Therefore, the room temperature resistance is controlled in the area concentration of preferably 10% or less, more preferably 5% or less, and further preferably 2% or less.

The area concentration (existence rate) of the P-type semiconductor can be controlled by the existence amount of at least one of BaCO₃ and TiO₂ or the addition amount of BNT at the time of calcination in the production step of a semiconductor ceramic composition. One example of a production method for obtaining the semiconductor ceramic composition of the present invention is described below.

In producing a semiconductor ceramic composition in which a part of Ba of BaTiO₃ is substituted with Bi-Na, the following separate calcination method is employed. A calcined BT powder composed of a calcined powder of (BaR)TiO₃ (in the case that the semiconductor ceramic composition has a composition formula of [(BiNa)ₓ(Ba_{1-y}R_{y})₁₋ₓ]TiO₃) or a calcined powder of Ba(TiM)O₃ (in the case that the semiconductor ceramic composition has a composition formula of [(BiNa)ₓBa₁₋ₓ][Ti_{1-z} M_{z}]O₃), and a calcined BNT powder composed of a calcined powder of (BiNa)TiO₃ are separately prepared, and the calcined BT powder and the calcined BNT powder are calcined at the respective suitable temperatures for those powders.

When the above-described separate calcination method is used, volatilization of Bi in the calcined BNT powder can be suppressed, and generation of a different phase can be suppressed through prevention of a compositional deviation of Bi-Na. Therefore, when those powders are mixed, followed by shaping and sintering, a semiconductor ceramic composition which has low room temperature resistivity and in which fluctuation of Curie temperature is suppressed can be obtained.

The following three methods can be employed to obtain the semiconductor ceramic composition of the present invention by using the above-described separate calcination method. (1) A method in which the calcined BT powder is prepared in the separate calcination method such that a part of BaCO₃ and TiO₂ remains in the calcined BT powder (hereinafter referred to as a "residual method"); (2) a method in which at least one of BaCO₃ and TiO₂ is added to at least one of the calcined BT powder and the calcined BNT powder prepared by the separate calcination method (hereinafter referred to as an "addition method"); and (3) a method in which BT and BNT are sintered without being completely solid-solubilized, in sintering the calcined BT powder and the calcined BNT powder prepared by the separate calcination method (hereinafter referred to as an "incomplete sintering method"). Each method of the above (1) to (3) is described below in the order.

### (1) Residual method

In the separate calcination method, the calcined BT powder is prepared by mixing BaCO₃, TiO₂ and a raw material powder of a semiconductor dopant, such as La₂O₃ or Nb₂O₅, to prepare a mixed raw material powder, followed by calcination. Hitherto, the calcination has been carried out at a temperature in a range of from 900°C to 1300°C in order to form a complete single phase. On the other hand, the residual method is that the calcination is carried out at a temperature of 900°C or lower which is lower than the conventional calcination temperature, and a part of BaCO₃ and TiO₂ remains in the calcined powder without completely forming (BaR)TiO₃ or Ba(TiM)O₃.

When the calcined BT powder having a part of BaCO₃ and TiO₂ remaining therein by the residual method and the calcined BNT powder separately prepared are mixed, and the resulting mixed calcined powder is then shaped and sintered, a semiconductor ceramic composition of the present invention in which a part of Ba of BaTiO₃ is substituted with Bi-Na, and which has P-type semiconductor at the grain boundary, can be obtained.

To change the residual amount of BaCO₃ and TiO₂ in the calcined BT powder, the residual amount of BaCO₃ and TiO₂ in the calcined BT powder can be changed by changing the calcination temperature within a range of 900°C or lower, changing the calcination time or changing a blending composition of the calcined BT powder, in the step of preparing the calcined BT powder. This can control the existence ratio of P-type semiconductor.

In the above-described residual method, when the calcination temperature exceeds 900°C, (BaR)TiO₃ or Ba(TiM)O₃ is excessively formed, and BaCO₃ and TiO₂ cannot remain, which is not preferred. The calcination time is preferably from 0.5 hours to 10 hours, and more preferably from 2 to 6 hours.

The residual amount of BaCO₃ and TiO₂ in the calcined BT powder is preferably such that the amount of BaCO₃ is 30 mol% or less and the amount of TiO₂ is 30 mol% or less when the sum of (BaR)TiO₃ or Ba(TiM)O₃, BaCO₃ and TiO₂ is regarded as 100 mol%.

The reason that the residual amount of BaCO₃ is set to 30 mol% or less is that when the amount exceeds 30 mol%, a different phase other than BaCO₃ is formed, and the room temperature resistivity is increased. Furthermore, CO₂ gas is generated in the sintering step, and cracks are generated in a sintered body, which is not preferred. The reason that the residual amount of TiO₂ is set to 30 mol% or less is that when the amount exceeds 30 mol%, a different phase other than BaCO₃ is formed, and the room temperature resistivity is increased.

The upper limit of the residual amount of BaCO₃ and TiO₂ is the total 60 mol% of BaCO₃ 30 mol% and TiO₂ 30 mol%, and the lower limit thereof is an amount exceeding 0. In the case that BaCO₃ exceeds 20 mol%, if TiO₂ is less than 10 mol%, a different phase other than BaCO₃ is formed and room temperature resistivity is increased, which is not preferred. The case that TiO₂ exceeds 20 mol% and BaCO₃ is less than 10 mol% is similarly not preferred. Therefore, in the case that one of BaCO₃ and TiO₂ exceeds 20 mol%, it is preferable to adjust calcination temperature, temperature, blending composition and the like such that the other is 10 mol% or more.

In the above-described step of preparing the calcined BNT powder composed of the calcined powder of (BiNa)TiO₃, which is to be mixed with the calcined BT powder in which a part of BaCO₃ and TiO₂ remains therein, a mixed raw material powder by mixing Na₂CO₃ and Bi₂O₃, TiO₂ as raw material powders is firstly prepared. In this case, when Bi₂O₃ is excessively added (for example, exceeding 5 mol%), a different phase is formed at the time of the calcination, and room temperature resistivity is increased, which is not preferred.

Next, the mixed raw material powder is calcined. The calcination temperature is preferably in a range of from 700°C to 950°C. The calcination time is preferably from 0.5 hours to 10 hours, and more preferably from 2 hours to 6 hours. When the calcination temperature is lower than 700°C or the calcination time is shorter than 0.5 hours, unreacted Na₂CO₃ or NaO formed through decomposition react with water in the atmosphere or a solvent in the case of wet mixing, resulting in causing compositional deviation or characteristic fluctuation, which is not preferred. On the other hand, when the calcination temperature exceeds 950°C or the calcination time exceeds 10 hours, Bi greatly volatilizes, resulting in causing compositional deviation and promoting formation of a different phase, which is not preferred.

In the steps of preparing the above-described respective calcined powders, the raw material powders may be crushed depending on the grain size thereof in mixing the raw material powders. Mixing and crushing may be any of wet mixing and crushing using pure water or ethanol, and dry mixing and crushing. However, when dry mixing and crushing are conducted, compositional deviation can further be prevented, which is preferred. In the above, BaCO₃, Na₂O₃, TiO₂ and the like are exemplified as the raw material powders. However, other Ba compounds, Na compounds and the like may be used.

As described above, the calcined BT powder in which a part of BaCO₃ and TiO₂ remains therein, and the calcined BNT powder are separately prepared, and the respective calcined powders are blended in given amounts, followed by mixing. The mixing may be any of wet mixing using pure water or ethanol, and dry mixing. When dry mixing is conducted, compositional deviation can further be prevented, which is preferred. Furthermore, crushing after mixing may be conducted, or mixing and crushing may simultaneously be conducted, depending on the grain size of the calcined powders. The average grain size of the mixed calcined powder after mixing and crushing is preferably from 0.5 µm to 2.5 µm.

In at least one step of the step of preparing the calcined BT power and the step of preparing the calcined BNT power, or in the step of mixing the respective calcined powders, described above, when Si oxide is added in an amount of 3.0 mol% or less or Ca oxide or Ca carbonate is added in an amount of 4.0 mol% or less, the Si oxide can suppress the abnormal growth of crystal grains and additionally can facilitate to control resistivity, and the Ca oxide or the Ca carbonate can improve sinterability at low temperature and can control reducibility. When those are added in an amount exceeding the above-described limit, the composition does not show semiconductivity, which is not preferred. The addition is preferably conducted before mixing in each step.

The mixed calcined powder obtained in the step of mixing the calcined BT powder and the calcined BNT powder is shaped by the desired shaping means. If necessary, the crushed powder may be granulated with a granulator before shaping. The resulting compact after shaping preferably has a density of from 2.5 to 3.5 g/cm³.

The sintering can be conducted in the atmosphere, in a reduced atmosphere or in an inert gas atmosphere having low oxygen concentration. The sintering is particularly preferably conducted in a nitrogen or argon atmosphere having an oxygen concentration of less than 1%. The sintering temperature is preferably from 1250°C to 1380°C. The sintering time is preferably from 1 hour to 10 hours, and more preferably from 2 hours to 6 hours. With deviating from the preferred conditions of those, room temperature resistivity is increased and jump characteristic is decreased, which are not preferred.

Another sintering step is that in an atmosphere in which a temperature is from 1290°C to 1380°C and an oxygen concentration is less than 1%, (1) sintering is performed in a sintering time shorter than 4 hours, or (2) sintering is performed in a sintering time satisfying the formula: ΔT≥25t (t=sintering time (hr), and ΔT=cooling rate (°C/hr) after sintering), and cooling after sintering is then performed at a cooling rate satisfying the above formula. This sintering step enables to obtain a semiconductor ceramic composition having improved temperature coefficient of resistance at a high temperature region (Curie temperature or higher) while maintaining room temperature resistivity low.

### (2) Addition method

In the addition method, the calcined BT powder is prepared by mixing BaCO₃, TiO₂ and a raw material powder of a semiconductor dopant, such as La₂O₃ or Nb₂O₅, to prepare a mixed raw material powder, followed by calcination. The calcination temperature is preferably 1000°C or higher. When the calcination temperature is lower than 1000°C, a complete single phase of (BaR)TiO₃ or Ba(TiM)O₃ is not formed, which is not preferred. Where a complete single phase is not formed, unreacted BaCO₃ and TiO₃ remain. This method is based on the assumption that at least one of a BaCO₃ powder and a TiO₃ powder is added. Therefore, it is difficult to estimate the addition amount. However, minor remainders of BaCO₃ and TiO₃ can be allowable. The calcination temperature is preferably from 1000°C to 1300°C. The calcination time is preferably from 0.5 hours to 10 hours, and more preferably from 2 to 6 hours.

In the addition method, the step of preparing the calcined BNT powder, the step of mixing (crushing) the calcined BT powder and the calcined BNT powder, and the like are the same as in the above-described residual method.

The characteristic of the addition method is that at least one of BaCO₃ and TiO₂ is added to the calcined BT powder, the calcined BNT powder or the mixed calcined powder thereof, prepared above. When the mixed calcined powder after the addition is shaped and sintered, a semiconductor ceramic composition of the present invention in which a part of Ba of BaTiO₃ is substituted with Bi-Na and which has P-type semiconductor at the grain boundary can be obtained.

The addition amount in adding BaCO₃ or TiO₂ is preferably that BaCO₃ is 30 mol% or less and TiO₂ is 30 mol% or less when the total of (BaR)TiO₃ or Ba(TiM)O₃, and at least one of BaCO₃ and TiO₂ is regarded as 100 mol%. The existence ratio of the P-type semiconductor can be controlled by changing the addition amount. In particular, the addition method can accurately adjust the addition amount, and therefore has the effect that it is possible to control the room temperature resistivity extremely accurately.

The reason that the amount of BaCO₃ added is set to 30 mol% or less is that when it exceeds 30 mol%, a different phase other than BaCO₃ is formed and the room temperature resistivity is increased. Furthermore, CO₂ gas is generated in the sintering step, and cracks cause in the sintered body, which is not preferred. The reason that the amount of TiO₂ added is set to 30 mol% or less is that when it exceeds 30 mol%, a different phase other than BaCO₃ is formed and the room temperature resistivity is increased.

When both BaCO₃ and TiO₂ are contained, the upper limit of the addition amount is the total 60 mol% of BaCO₃ 30 mol% and TiO₂ 30 mol%, and the lower limit is the amount exceeding 0. In the case that BaCO₃ exceeds 20 mol%, if TiO₂ is less than 10 mol%, a different phase other than BaCO₃ is formed and the room temperature resistivity is increased, which is not preferred. The case that TiO₂ exceeds 20 mol% and BaCO₃ is less than 10 mol% is similarly not preferred. Therefore, in the case that one of BaCO₃ and TiO₂ exceeds 20 mol%, the other is preferably 10 mol% or more.

The calcined BT powder is preferably such that a complete single phase of (BaR)TiO₃ or Ba(TiM)O₃ is formed therein, as described before. However, the addition amount can be changed by substituting a part of the calcined BT powder having a complete single phase formed therein with the calcined BT powder in which BaCO₃ and TiO₂ remain obtained by the above-described residual method and adding a given amount of at least one of BaCO₃ and TiO₂.

In the addition method, the calcined BT powder and the calcined BNT powder are separately prepared, and at least one of BaCO₃ and TiO₃ is added to the calcined BT powder, the calcined BNT powder or the mixed calcined powder thereof, as described above. Given amounts of the respective calcined powders are blended, followed by mixing. The mixing may be any of wet mixing using pure water or ethanol, and dry mixing. When dry mixing is conducted, compositional deviation can further be prevented, which is preferred. Furthermore, crushing after mixing may be conducted, or mixing and crushing may simultaneously be conducted, depending on the grain size of the calcined powders. The average grain size of the mixed calcined powder after mixing and crushing is preferably from 0.5 µm to 2.5 µm.

In at least one step of the step of preparing the calcined BT power and the step of preparing the calcined BNT power, or in the step of mixing the those calcined powders, described above, when Si oxide is added in an amount of 3.0 mol% or less, or Ca oxide or Ca carbonate is added in an amount of 4.0 mol% or less, the Si oxide can suppress the abnormal growth of crystal grains and can facilitate to control resistivity, and the Ca oxide or the Ca carbonate can improve sinterability at low temperature and can control reducibility. When those are added in an amount exceeding the above-described limit, the composition does not show semiconductivity, which is not preferred. The addition is preferably conducted before mixing in each step.

Subsequent steps of shaping, sintering and the like after the step of mixing the calcined BT powder and the calcined BNT powder are the same as in the above-described residual method.

### (3) Incomplete sintering method

In the incomplete sintering method, the step of preparing the calcined BT powder, the step of preparing the calcined BNT powder, the step of mixing (crushing) the calcined BT powder and the calcined BNT powder, and the shaping step are the same as in the above-described addition method.

The incomplete sintering method is characterized in that in sintering the mixed calcined powder of the calcined BT powder and the calcined BNT powder, the mixed calcined powder is sintered without completely solid-solubilizing BT and BNT. This enables to obtain a semiconductor ceramic composition of the present invention in which a part of Ba of BaTiO₃ is substituted with Bi-Na and which has P-type semiconductor at the grain boundary.

The sintering temperature and sintering time in the incomplete sintering method vary depending on the calcination temperature of the calcined BT powder. For example, in the case that the calcination temperature of the calcined BT powder is from 700°C to 1200°C, the sintering temperature is preferably a range of from 1250°C to 1380°C, and the sintering time is preferably a range of 2.5 hours or less. However, the preferred sintering time in the case that the sintering temperature is relatively low (for example, the case of 1300°C) may be 3.5 hours or less, and the preferred sintering time in the case that the sintering temperature is relatively high (for example, the case of 1380°C) is 2 hours or less. The case that the sintering temperature is high (for example, the case of 1400°C) and the case that the sintering temperature is low but the sintering time is long (for example, the case of 5 hours or more) are not preferred for the reason that BT and BNT may completely be solid-solubilized.

The degree of solid solubilization of BT and BNT can be changed by controlling the sintering temperature and the sintering time, as described above, and this enables to control the existence ratio of the P-type semiconductor.

### Examples

Raw material powders of BaCO₃, TiO₂ and La₂O₃ were prepared and blended so as to be (Ba_{0.994}La_{0.006})TiO₃, followed by mixing in pure water. The mixed raw material powder thus obtained was calcined at a temperature shown in Table 1 for 4 hours in the atmosphere to prepare a calcined BT powder.

Raw material powders of Na₂CO₃, Bi₂O₃ and TiO₂ were prepared and blended so as to be (Bi_{0.5}Na_{0.5})TiO₃, followed by mixing with a dry mixing machine. The mixed raw material powder thus obtained was calcined at 800°C for 2 hours in the atmosphere to prepare a calcined BNT powder.

The calcined BT powder and the calcined BNT powder, prepared above were blended so as to be 73:7 in molar ratio. The resulting mixture was mixed and crushed by a pot mill using pure water as a medium until a central grain size of the mixed calcined powder became from 1.0 µm to 2.0 µm, followed by drying. PVA was added to a crushed powder of the mixed calcined powder, followed by mixing, and the resulting mixture was granulated with a granulator. The granulated powder thus obtained was shaped with a uniaxial pressing machine, and the resulting shaped body was subjected to binder removal at 700°C, and then sintered at a temperature shown in Table 1 for a sintering time shown in Table 1 in nitrogen. Thus, a sintered body was obtained.

In the semiconductor ceramic compositions of the present invention shown in Table 1, samples having the BT calcination temperatures of 700°C and 900°C are examples by the above-described residual method, and samples having the BT calcination temperatures of 1000°C and 1200°C are examples by the above-described incomplete sintering method.

The sintered body obtained was processed into a plate having a size of 10 mm × 10 mm × 1mm to prepare a test piece, and an ohmic electrode was then formed. Each test piece was tested with a resistance meter to determine its resistivity change in a temperature range of from room temperature to 270°C, and room temperature resistivity, Curie temperature and temperature coefficient of resistance were obtained. The results obtained are shown in Table 1. In table 1, the samples numbered with * are comparative examples. In the Examples, the temperature coefficient of resistance was obtained by the following formula: α=(InR₁-InR_{c})×100/(T₁-T_{c}) wherein R₁ is maximum resistivity, R_{c} is resistivity at T_{c}, T₁ is a temperature showing R₁, and T_{c} is a Curie temperature.

A plain face of the sintered body obtained was observed with a scanning capacitance microscope, and the observation image was subjected to image processing. The number of dots on the parts corresponding to the P-type semiconductor in the data after the image processing was counted, the number of dots was multiplied by an area per dot, and the area obtained was divided by the total area of parts image-processed. Thus, an area concentration (%) of the P-type semiconductor was obtained. The results obtained are shown in Table 1. Structure photographs of observation images of the sample numbers 3, 6, 12, 20 and 22 are shown in Figs. 1, 2, 3, 4 and 5, respectively.

**Table 1**

| No. | Sintering temperature (°C) | Sintering time (hr) | BT calcination temperature (°C) | Area concentration ofP-type part (%) | p25 (Ωcm) | Tc (°C) | Temperature coefficient of resistance (%/°C) |
|---|---|---|---|---|---|---|---|
| 1 | 1300 | 2.5 | 700 | 1.46 | 106.1 | 167.1 | 9.0 |
| 2 | | | 900 | 1.47 | 101.5 | 166.3 | 9.9 |
| 3 | | | 1000 | 1.43 | 99.9 | 159.4 | 9.5 |
| 4 | | | 1200 | 1.53 | 99.8 | 155.3 | 8.9 |
| 5 | | 3.5 | 900 | 0.01 | 63.4 | 153.1 | 8.3 |
| 6 | 1320 | 2.5 | 700 | 1.16 | 95.2 | 153.4 | 8.2 |
| 7 | | | 900 | 1.17 | 93.9 | 157.7 | 7.7 |
| 8 | | | 1000 | 1.16 | 92.8 | 155.5 | 8.2 |
| 9 | | | 1200 | 1.15 | 88.3 | 157.9 | 7.9 |
| 10 | 1340 | 2.5 | 700 | 1.00 | 90.1 | 153.9 | 7.3 |
| 11 | | | 900 | 1.08 | 89.2 | 154.1 | 6.7 |
| 12 | | | 1000 | 1.10 | 88.8 | 153.5 | 8.0 |
| 13 | | | 1200 | 1.04 | 87.5 | 153.2 | 8.2 |
| 14 | 1360 | 2.5 | 700 | 0.80 | 90.0 | 157.1 | 7.8 |
| 15 | | | 900 | 0.79 | 86.5 | 153.0 | 7.7 |
| 16 | | | 1000 | 0.88 | 77.4 | 158.8 | 7.3 |
| 17 | | | 1200 | 0.77 | 78.8 | 153.1 | 7.3 |
| 18 | 1380 | 2 | 700 | 0.41 | 74.6 | 160.9 | 7.3 |
| 19 | | | 900 | 0.41 | 76.3 | 155.2 | 8.1 |
| 20 | | | 1000 | 0.38 | 64.3 | 149.9 | 7.6 |
| 21 | | | 1200 | 0.02 | 66.6 | 150.8 | 7.2 |
| 22 | | 2.5 | 900 | 0.01 | 59.9 | 152.7 | 7.0 |
| 23* | 1400 | 2 | 900 | 0.00 | 60.3 | 160.1 | 6.9 |
| 24* | | | 1000 | 0.00 | 52.4 | 153.5 | 6.9 |
| 23* | 1340 | 5 | 900 | 0.00 | 66.8 | 153.7 | 7.5 |
| 24* | | | 1000 | 0.00 | 69.4 | 153.8 | 8.1 |

| | | | | | | | |
|---|---|---|---|---|---|---|---|
| * Comparative Example T₂: Temperature showing maximum resistivity T₁: Temperature exceeding Curie point Tc and showing resistivity twice room temperature resistivity ρ25 Definition formula of temperature coefficient of resistance α(%/°C): α=(Inρ_{T2}-Inρ_{T1})/(T₂-T₁)×100 ρ_{T1} and ρ_{T2}: Resistivities at temperatures T₁ and T₂ | | | | | | | |

As is apparent from Table 1, the area concentration (existence ratio) of the P-type semiconductor can be changed by controlling BT calcination temperature, sintering temperature and sintering time, and this can arbitrary and accurately control jump characteristics (temperature coefficient of resistance). It is further seen that the semiconductor ceramic composition of the present invention maintains room temperature resistivity low.

On the other hand, as in the Comparative Examples, in the case where the calcination temperature is high and the sintering temperature is also high or in the case where the sintering temperature is low but the sintering time is long, P-type semiconductor is not formed, and therefore it is difficult to control jump characteristic (temperature coefficient of resistance). It is considered that the reason that the P-type semiconductor is not formed is that BT and BNT were completely solid-solubilized at the time of sintering. In view of those results, the preferred area concentration of P-type semiconductor is set to 0.01 % or more.

In Figs. 1 to 5, parts shown in white are a main crystal of the semiconductor ceramic composition of the present invention, parts shown in gray are a grain boundary, and parts shown in black than gray are a P-type semiconductor. As is apparent from Figs. 1 to 5, all drawings have parts shown in black than gray, and it is seen that P-type semiconductor is present. It is further seen that the P-type semiconductor is present at the grain boundary.

### INDUSTRIAL APPLICABILITY

The semiconductor ceramic composition obtained according to the present invention is optimal for use as a material for a PTC thermistor, a PTC heater, a PTC switch, a temperature detector, and the like.

Although the present invention has been described in detail and by reference to the specific embodiments, it is apparent to one skilled in the art that various modifications or changes can be made therein without departing the spirit and scope of the present invention.
This application is based on Japanese Patent Application No. 2007-333528 filed on December 26, 2007, the contents of which are incorporated herein by reference.

## Claims

1. A semiconductor ceramic composition in which a part of Ba of BaTiO₃ is substituted with Bi-Na, the composition having a P-type semiconductor at a grain boundary.

2. The semiconductor ceramic composition according to claim 1, wherein an area concentration of the P-type semiconductor is 0.01 % or more in accordance with an observation with a scanning capacitance microscope.

3. The semiconductor ceramic composition according to claim 1, having a composition formula represented by [(BiNa)ₓ(Ba_{1-y}R_{y})₁₋ₓ]TiO₃ (wherein R is at least one rare earth element), in which x and y satisfy 0<x≤0.3 and 0<y≤0.02.

4. The semiconductor ceramic composition according to claim 1, having a composition formula represented by [(BiNa)ₓBa₁₋ₓ][Ti_{1-z}M_{z}]O₃ (wherein M is at least one ofNb and Sb), in which x and z satisfy 0<x≤0.3 and 0<z≤0.005.
